(19) Europäisches Patentamt
European Patent Office
Office européen des brevets

(11) Publication number: 0 223 000 A2

# (12) EUROPEAN PATENT APPLICATION

(21) Application number: **86112444.4**

(22) Date of filing: **09.09.86**

(51) Int. Cl.⁴: C 08 J 5/06, D 06 M 13/02, D 06 M 13/50

(30) Priority: **21.10.85 US 789879**
**14.07.86 US 885520**

(43) Date of publication of application: **27.05.87**
**Bulletin 87/22**

(84) Designated Contracting States: **BE DE FR GB IT**

(71) Applicant: **ALLIED CORPORATION, Columbia Road and Park Avenue P.O. Box 2245R (Law Dept.), Morristown New Jersey 07960 (US)**

(72) Inventor: **Marshall, Robert Moore c/o Allied Corp., P.O. Box 2245R Morristown, New Jersey 07960 (US)**

(74) Representative: **Brullé, Jean et al, Service Brevets Bendix 44, rue François 1er, F-75008 Paris (FR)**

(54) **Additives to polyester tire yarn overfinish to reduce dip penetration.**

(57) A fiber finish composition for polyamide and polyester yarns comprises paraffin wax in amounts sufficient to control the level of RFL dip. Polyester yarn for tire cord having incorporated thereon a finish composition comprising paraffin wax in an amount sufficient to impart improved anti-wicking properties to the tire cord provides an improved tire cord with an improved controlled level of RFL dip pick-up. Twist plied tire cord prepared from polyamide yarn having deposited thereon the composition of this invention displays an important reduction in treated cord stiffness.

EP 0 223 000 A2

# ADDITIVES TO POLYESTER TIRE YARN OVERFINISH TO REDUCE DIP PENETRATION

## BACKGROUND OF THE INVENTION

This invention relates to improved multifilament yarns for industrial uses. More particularly, it relates to a fiber finish composition specifically for polyamide and polyethylene terephthalate yarns to be processed into tire cord for use as reinforcement in tires.

U.S. Patent No. 3,687,721 to Dardoufas discloses an improved polyester tire yarn treated with a spin finish composition comprising hexadecyl stearate, glycerol monooleate, decaglycerol tetraoleate, ethoxylated tall oil fatty acid, sulfonated glycerol trioleate, and an ethoxylated alkylamine.

U.S. Patent 3,730,892 to Marshall et al. discloses polyester tire yarn treated with an overfinish composition additionally comprising a silane having the structural formula

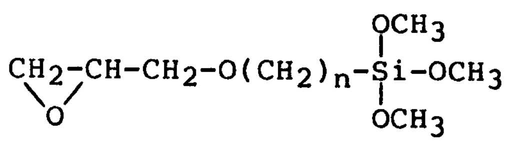

wherein n = 2 to 5. The composition is applied after the draw zone. The treated yarn can be subsequently processed into the cord with only a single dip treatment required to obtain the fiber to rubber adhesion necessary to use in tires.

While the polyester tire yarns disclosed above are successful commercial products, further improvements are desirable. When processed into tire cord and treated with resorcinol-formaldehyde-latex (RFL) dips, the tire cord may pick up too much of the RFL dip that subsequently flakes off the fiber in the treating oven, creating a housekeeping problem and a fire hazard. When the RFL treated tire cord is incorporated into the construction of a tire and the composite structure cured, it is essential to allow any entrained air in the composite tire to be transmitted out of a tire during curing. If, during dip

treating, the tire cord picks up too much RFL dip that saturates the interstices of the tire cord, a pathway for entrained air may be blocked, thus increasing the probability of post-cure blows.

Stabilized polyamide compositions incorporating copper compounds together with diarylamine antioxidants into the polymer are disclosed in U.S. Patent 3,113,120 to Papero et al. Such compositions display resistance to deteriorating effects of light, weathering, and heat. Polyamide compositions incorporating an aging inhibitor which is a diphenylamine-acetone condensation product are disclosed in U.S. Patent 3,003,995 to Schule.

Representative finishes for polyamide yarn to be processed into tire cord include U.S. Patent 4,129,507 to Marshall et al. and U.S. Patent 4,371,658 to Marshall et al. U.S. Patent 3,397,081 to Mayberry discloses a finish composition for nylon tire cord which includes the low temperature reaction product of diphenylamine and acetone. U.S. Patent 4,469,606 to Reid et al. discloses a fiber treating composition comprising a mixture of a specified triazine together with a multifunctional hindered phenol.

Polyamide yarn is processed into tire cord and treated with resorcinol-formaldehyde-latex (RFL) dip, then incorporated into the construction of a tire and the composite structure cured. The RFL treated tire cord must be sufficiently flexible to permit proper handling. Applicant has discovered that by incorporating a sufficient amount of paraffin wax into the finish composition, the level of penetration of RFL dip into tire cord is properly controlled, thus reducing stiffness of the resulting treated cord.

## SUMMARY OF THE INVENTION

A fiber finish composition for polyamide and polyester yarns comprises paraffin wax in amounts sufficient to control the level of RFL dip.

Polyester yarn for tire cord having incorporated thereon a finish composition comprising an aqueous

emulsion of a lubricant selected from the group consisting of hexadecyl stearate, butyl stearate, natural or modified glycerides, and mineral oil; glycerol monooleate; decaglycerol tetraoleate; polyoxyethylene tall oil fatty acid; sulfonated glycerol trioleate; polyoxyethylene tallow amine; 0-30 parts by weight of the nonaqueous portion of the emulsion of a silane having the structural formula

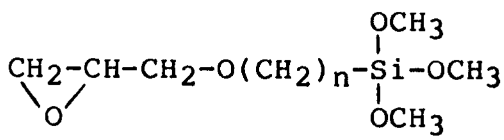

wherein n = 2 to 5; and paraffin wax in an amount sufficient to impart improved anti-wicking properties to the tire cord provides an improved tire cord with an improved controlled level of RFL dip pick-up.

A finish composition for polyamide yarn to be processed into tire cord is an oil-in-water emulsion, the oil portion comprising up to 15 weight percent paraffin wax. Twist plied tire cord prepared from polyamide yarn having deposited thereon the composition of this invention displays an important reduction in treated cord stiffness. The method for producing twist plied tire cord is claimed.

DETAILED DESCRIPTION OF THE INVENTION

The fiber finish compositon of the invention for polyester yarn is an aqueous emulsion, the non-aqueous portion of the emulsion comprising

(a) about 45 to 65 parts by weight of a lubricant selected from the group consisting of hexadecyl stearate, butyl stearate, natural or modified glycerides, and mineral oil;

(b) about 4 to 6 parts by weight of glycerol monooleate;

(c) about 3.5 to 5.5 parts by weight of decaglycerol tetraoleate;

(d) about 5.5 to 8.1 parts by weight of polyoxyethylene tall oil fatty acid containing 10-20 oxyethylene units per mole;

(e) about 8.0 to 12.0 parts by weight sulfonated glycerol trioleate;

(f) about 2.0 to 4.0 parts by weight polyoxyethylene tallow amine containing an average of 10-30 oxyethylene units per mole;

(g) 0 to 30 parts by weight of a silane having the structural formula

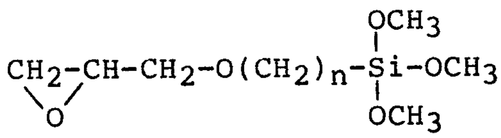

wherein n = 2 to 5;

(h) about 3-15 weight percent, based on the non-aqueous portion, of paraffin wax.

The fiber finish composition of the invention for polyamide yarn is an aqueous emulsion selected as an appropriate finish composition for polyamide tire yarn, and comprises paraffin wax in the nonaqueous portion of the emulsion. The finish is applied in an amount sufficient to apply 0.05 to 1.0 weight percent paraffin solids on the yarn, preferably 0.1 to 0.5 weight percent.

The paraffin wax may be employed in the composition in amounts up to 15 weight percent of the non-aqueous portion of the emulsion, more preferably in amounts of from 4 to 10 weight percent, more preferably in amounts of from 6 to 10 weight percent. The paraffin wax may be either natural or synthetic. Preferred are refined paraffins (having an oil content of about 0.5 percent by weight, white in color, and free of odor) and/or semi-refined paraffins (having an oil content of 1.0 to 2.5 percent by weight, off-white in color and slight odor). Mixtures of paraffin waxes may also be employed. It is preferred that the paraffin waxes have a melting range of from about 30°C to about 80°C, more preferably from about 40°C to 60°C.

The aqueous emulsion is preferably applied to yarn as an overfinish after drawing has been completed in any of the conventional ways of applying yarn finishes. A satisfactory manner of applying the finish is by feeding

the emulsion to a trough equipped with a rotatable roll dipping therein and passing the yarn in contact with this roll. The rate of rotation of the roll can be adjusted to provide desired pick-up of coating by the yarn.

The finish composition of the present invention provides substantial advantages over the prior art compositions when applied to polyester yarn for use as tire cord without interfering with fiber to rubber adhesion. It is known in the prior art to pretreat polyester fibers, then treat the tire cord by "dipping" in a resorcinol-formaldehyde-latex (RFL) adhesive system to obtain good fiber to rubber adhesion. See, for example, U.S. Patents 3 687 721 and 3 730 892 cited above, and U.S. 4 374 031 to Kudo et al.

The composition of the present invention offers important improvements over U.S. 3 687 721 and 3 730 892 by improving control over the amount of RFL dip pick-up during treatment. If excess RFL dip picked up by the tire cord during treatment subsequently flakes off the fiber in the treating oven, a fire hazard as well as a housekeeping problem is created. Additionally, it is believed the present invention prevents the RFL dip from saturating the interstices of the tire cord, thus remaining primarily toward the outer surface of the tire cord. This provides important interstices through the interior of the cord, allowing entrained air to emerge during curing of the tire and preventing the problem of post-cure blows caused by trapped air.

EXAMPLE 1

A base formulation for finish compositon was prepared with the following constituents:

| | Weight Percent |
|---|---|
| Hexadecyl stearate | 62.7 |
| Glycerol monooleate | 5.9 |
| decaglycerol tetraoleate | 8.0 |
| POE (15) tall oil fatty acid | 7.8 |
| Sulfonated glycerol trioleate | 11.8 |
| POE (20) tallow amine | 3.8 |

A base finish composition was prepared by combining 24.6 parts of the base formulation above, 70.0 parts $H_2O$, and 5.4 parts gamma-glycidoxypropyltrimethoxy silane.

Polyethylene terephthalate yarn samples were prepared by treating 1000 denier/192 filament spun-drawn yarn with the base finish composition (control) and with the base finish composition combined with the additives enumerated in Table I below. Total finish level was about 0.8% solids on the weight of the yarn.

The yarn samples were twisted into greige tire cord. The 1000/2 11.5 X 11.5 TPI cord was allowed to stand vertically in a RFL dip formulation composed of 20.8 weight percent vinyl pyridine latex, 2.24 weight percent resorcinol, 1.96 weight percent ammonium hydroxide, 1.16 weight percent formaldehyde, 0.061 weight percent sodium hydroxide, and 73.8 weight percent water. The length of wicking was measured versus a two minute time period. Results are presented in Table 1.

TABLE I

| Finish | RFL Wicking mm in 2 min. |
|---|---|
| Control | 18.0 |
| Control + 10 wt% of 50% paraffin wax emulsion (5.0% solids) | 3.4 |
| Control + 5 wt% of 50% paraffin wax emulsion (2.5% solids) | 4.0 |
| Control + 2.5% solids Repelotex D metal salt - paraffinic wax complex emulsion available from Lyndal Chemical Co. | 6.8 |
| Control + 2% solids Repelotex HM melamine wax available from Lyndal Chemical Co. | 14.2 |
| Control + 1.6% of 20% polyethylene emulsion | 17.0 |
| Control + 3.2% of 20% polyethylene emulsion | 18.0 |
| Control + 5% 100 cts silicone oil in oil base | 16.0 |
| Control + 0.6% solids Allied fluorochemical described in U.S. Patent 4,192,754 | 13.0 |

TABLE I (CONTINUED)

| Finish | RFL Wicking mm in 2 min. |
|---|---|
| Control + 1.2% solids Allied fluorochemical described in U.S. Patent 4,192,754 | 10.5 |
| Control | 18.0 |
| Control + 1% solids Repellan 80 emulsified silicone compound available from Henkel Corp. | 12.9 |

From Table I, it is seen that the presence of the paraffin wax substantially decreases the level of RFL wicking.

EXAMPLE 2

Two tire cords are prepared from 1000 denier/192 filament polyethylene terephthalate yarn, tire cord A containing about 0.8% solids on the weight of the yarn of the control finish composition, tire cord B containing about 0.8% solids of the control finish composition + 5 wt% of 50% paraffin wax emulsion, both finish compositions described above in Example 1. The two tire cords are dip-treated with RFL adhesive. Tire cord B picks up less of the RFL dip during treatment than the tire cord A. In subsequent oven treatment of the tire cords after dipping, there is no perceptible problem of RFL "dusting" with tire cord B. When the RFL treated tire cord is further processed into tires and cured there is no problem perceived with post-cure blows with tire cord B. Fiber to rubber adhesion of tire cords A and B are similar.

The finish composition of the present invention provides substantial advantages over the prior art compositions when applied to polyamide yarn for use as tire cord without interfering with fiber to rubber adhesion.

A preferred finish composition for use with the present invention is disclosed in copending U.S. Patent Application Serial No. 773,682 filed September 9, 1985.

Therein, a mixture of antioxidant compounds including a diarylamine-ketone condensation product and certain multifunctional hindered phenolic compounds, combined with compatible finishes and applied to polyamide yarn for tire cord are shown to yield enhanced properties after aging, particularly improved retention of fiber-to-rubber adhesion.

The diarylamine-ketone condensation products which comprise one component of the blend of antioxidants are known as a distinct class among the various classes of rubber antioxidant compounds. Pertinent patent disclosures relating to diarylamine-ketone condensation products include U.S. Patents 1,906,935; 1,975,167; 2,002,642; and 2,562,802. Specific products which may be utilized include "Aminox" supplied by Uniroyal, Inc., described as a low temperature reaction product of diphenylamine and acetone with a melting point of 85 to 95°C. It is expected that known diarylamine ketone condensation products may be utilized as well.

The second component of the blend of antioxidants is selected from the group consisting of 1,3,5 tris(4t-butyl-3hydroxyl-2,6-dimethylbenzyl)-1,3,5 triazine-2,4,6(1H, 3H, 5H) trione, available under the trade name "Cyanox 1790" from American Cyanamid, and 1,3,5 tris(2 hydroxyl ethyl)-s-triazine2,4,6(1H, 3H, 5H) trione available as "Agerite SKT" from R. T. Vanderbilt Company. Structurally similar multifunctional hindered phenol compounds are contemplated to be within the scope of the invention.

With respect to proportions of the two components of the combination in the polyamide finish composition, it is sufficient to include an effective amount of each component to obtain enhanced aged adhesion retention for tire cord over that obtainable by an equivalent weight of either component alone, a preferred weight ratio of diarylamine-ketone condensation product to multifunctional hindered phenolic compound being from 8:1 to 1:1. The

finished yarn must have an effective amount of the two components applied to the surface thereof, preferably at least 100 ppm of the combined antioxidant compounds based on the weight of the yarn, more preferably at least 150 ppm. Based on the weight of the yarn, it is preferred that there be at least about 80 ppm of the diarylamine-ketone condensation product, more preferably at least 120 ppm, and that there be at least about 20 ppm of the hindered phenolic compound, more preferably at least 30 ppm.

By incorporating paraffin wax, in the amounts disclosed above, into the finish composition containing the blend of antioxidants, polyamide tire cord made from the yarn, after treatment with RFL dip and subjected to aging conditions, retains acceptable levels of fiber to rubber adhesion and has a significant reduction in treated cord stiffness over a finish without the paraffin wax.

In the examples which follow, drawn polyamide yarn with a nonionic spin finish based on rearranged glycerides at a targeted application of about 0.8 percent finish on the weight of the fiber was utilized.

EXAMPLE 3

Chemowax 50s, a 50 percent solids emulsion of paraffin wax, available from Chematron, Inc., Charlotte, North Carolina, was applied in a metered overfinish operation to drawn 1260 denier/204 filament polyamide yarn at approximately 0.1 weight percent solids (paraffin) add on. The yarn with paraffin, and a control without paraffin, were twisted into three-ply cords. The two greige cords were tested for water wicking (wettability) by suspending ends vertically into a tray of test liquid. The distance the liquid wicks up the cord is recorded in mm at specific times. The cord with paraffin showed substantially less wicking than the control.

The cords were treated with a standard resorcinol-formaldehyde-latex dip in a conventional manner. The dip pickup (DPU) was targeted for 4.5 weight percent on the

control cord. Dip pickup for the paraffin treated cord was substantially less, under the same conditions, with a significant reduction in treated cord stiffness being observed. No adverse effect was observed on other cord or in rubber properties. See Table II below.

The treated cords were tested for stiffness by Method F-1305 developed by General Tire. A sample of treated cord is placed over a plate with a one-quarter inch (0.64 cm) hole. A hook is attached to the cord. The force required to pull the cord through the hole is measured on an Instron instrument. The stiffer the cord, the greater the force required to pull the cord through. Results are reported below in Table II in grams.

Cord properties of denier, breaking strength, elongation at break and other cord properties were equivalent for the control and for the cord with paraffin.

TABLE II

1260/3 NYLON CORD STIFFNESS

| Greige | Control | Control with 0.1% Paraffin |
|---|---|---|
| Water Wicking, mm | | |
| 15 sec | 20 (1.1) | 3 (0.5) |
| 30 sec | 27 (1.1) | 5 (0.7) |
| 120 sec | 42 (2.1) | 11 (1.3) |
| Treated * | | |
| Stiffness, grams | 47 (4.2) | 21 (2.4) |
| DPU, % ** | 4.3 | 3.4 |

* 410°F/400°F (210°C/205°C), 9% Net Stretch.

** % DPU Set for 4.5% on Control; no adjustments made for other cord. Standard deviations in ( ).

EXAMPLE 4

A 20 weight percent oil-in-water emulsion was prepared; the nonaqueous portion consisting of:

| Component | Parts by Weight |
|---|---|
| Rearranged coconut oil-glycerol tripelargonate glyceride | 41 |
| POE*(16) castor oil | 18 |
| POE (9) oleyl ether | 25 |
| POE (9) nonyl phenol | 5 |
| "Aminox" diphenylamine-acetone reaction product, Uniroyal Chemical | 8 |
| "Cyanox 1790" available from American Cyanamid | 3 |

*POE = polyoxyethylene

The following overfinishes were prepared from the oil-in-water emulsion above:

| | Overfinish (parts by weight) | |
|---|---|---|
| | 1 | 2 |
| Emulsion above | 95 | 90 |
| Chemowax 50s | 5 | 10 |

The overfinishes 1 and 2 were applied to various 1890 denier polyamide yarns, all with a spin finish consisting of a nonionic finish based on rearranged glycerides. The overfinishes were applied at levels of 0.4 to 0.8 weight percent on the fiber. Significant reduction in wicking and treated cord stiffness was observed when compared to a control without overfinish. No loss of adhesion or other cord and in-rubber properties was observed. In Tables III and IV below, results of evaluation are provided. Each greige cord "group" was prepared from a single yarn supply package. The yarn was overfinished, then twisted into 1890 denier/2 ply 7.7 x 7.7 greige cords. The greige cords were treated with a standard resorcinol-formaldehyde-latex dip in a conventional manner.

TABLE III

1890/2 7.7 x 7.7 GREIGE CORD

| Yarn Supply Package | Overfinish | Water Wicking (mm) at: 15 Sec | 30 Sec | 120 Sec |
|---|---|---|---|---|
| 1 (1890-204) | Control | 26.3(1.3) | 34.9(1.2) | 58.3(1.5) |
| | 1 | 13.2(1.6) | 17.6(2.9) | 26.9(3.8) |
| | 2 | 10.7(0.9) | 14.5(1.3) | 22.8(2.2) |
| 2 (1890-272) | Control | 24.8(1.1) | 33.5(1.4) | 55.6(2.3) |
| | 1 | 6.6(3.7) | 8.9(3.8) | 12.7(3.5) |
| | 2 | 1.6(0.7) | 2.7(0.7) | 5.7(1.1) |
| 3 (1890-272) | Control | 26.2(1.1) | 33.8(2.0) | 55.5(2.4) |
| | 1 | 5.1(1.3) | 6.2(1.2) | 9.3(2.1) |
| | 2 | 1.3(0.7) | 2.3(0.5) | 4.8(1.1) |
| 4 (1890-272) | Control | 27.3(1.8) | 35.7(1.5) | 58.9(3.2) |
| | 1 | 13.4(1.7) | 17.3(2.0) | 26.5(4.1) |
| | 2 | 1.4(0.5) | 2.4(0.5) | 6.5(1.0) |
| 5 (1890-272) | Control | 25.0(1.1) | 34.0(1.8) | 54.1(2.1) |
| | 1 | 4.5(1.4) | 6.0(1.9) | 8.6(1.2) |
| | 2 | 1.7(1.3) | 2.8(1.4) | 5.6(0.7) |
| 6 (1890-256) | Control | 25.8(1.4) | 33.5(1.0) | 54.8(2.0) |
| | 1 | 3.7(1.3) | 5.6(1.5) | 9.0(1.6) |
| | 2 | 1.5(0.5) | 2.9(0.9) | 5.9(1.5) |

Standard deviations in ( ).

TABLE IV

1890/2 TREATED CORDS

| Yarn Supply Package | Overfinish | DPU (1) | "U" Adhesion Orig. | "U" Adhesion Aged | "U" Adhesion % | Stiffness, grams |
|---|---|---|---|---|---|---|
| 1 (1890-204) | Control | 4.2 | 67 | 43 | 64 | 44 |
| | 1 | 3.3 | 72 | 56 | 78 | 28 |
| | 2 | 2.9 | 68 | 47 | 69 | 29 |
| 2 (1890-272) | Control | 5.8 | 67 | 40 | 60 | 32 |
| | 1 | 4.3 | 63 | 46 | 73 | 22 |
| | 2 | 4.1 | 69 | 45 | 65 | 17 |
| 3 (1890-272) | Control | 4.8 | 67 | 40 | 60 | 33 |
| | 1 | 3.8 | 72 | 51 | 71 | 18 |
| | 2 | 3.3 | 65 | 47 | 72 | 17 |
| 4 (1890-272) | Control | 8.1 | 62 | 42 | 68 | 32 |
| | 1 | 5.0 | 67 | 46 | 69 | 24 |
| | 2 | 2.3 | 66 | 51 | 77 | 20 |
| 5 (1890-272) | Control | 6.2 | 66 | 44 | 67 | 34 |
| | 1 | 4.9 | 65 | 43 | 66 | 17 |
| | 2 | 2.5 | 62 | 45 | 73 | 14 |
| 6 (1890-256) | Control | 4.0 | 63 | 35 | 56 | 32 |
| | 1 | 3.7 | 61 | 47 | 77 | 16 |
| | 2 | 3.2 | 61 | 41 | 67 | 14 |

(1) DPU Set at 4.2% for 1-Control:
No further adjustments for other cords.

WHAT IS CLAIMED:

1. Synthetic multifilament yarn to be processed into tire cord having deposited thereon a finish composition which is an oil-in-water emulsion, the oil portion comprising 3 to 15 weight percent paraffin wax, in an amount sufficient to impart reduced resorcinol-formaldehyde-latex wicking to said tire cord.

2. The yarn of claim 1 which is polyester, said oil portion of the composition additionally comprising a lubricant selected from the group consisting of hexadecyl stearate, butyl stearate, natural or modified glycerides, and mineral oil; glycerol monooleate; decaglycerol tetraoleate; polyoxyethylene tall oil fatty acid; sulfonated glycerol trioleate; polyoxyethylene tallow amine; and 0-30 parts by weight of the non-aqueous portion of the emulsion of a silane having the structural formula

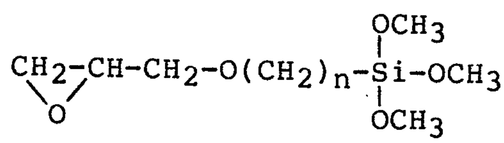

wherein n = 2 to 5.

3. The yarn of claim 2 wherein said lubricant is hexadecyl stearate.

4. The yarn of claim 3 wherein the oil portion comprises from 4 to 10 weight percent paraffin wax.

5. Twist plied tire cord prepared from the yarn of claim 2.

6. The yarn of claim 1 which is polyamide, said oil portion of the composition additionally comprising a diarylamine-ketone condensation product and a compound selected from the group consisting of 1,3,5 tris-(4t-butyl-3-hydroxy-2,6-dimethylbenzyl)-1,3,5 triazine-2,4,6(1H, 3H, 5H) trione and 1,3,5 tris(2-hydroxy ethyl)-s-triazine-2,4,6(1H, 3H, 5H) trione, said condensation product and said compound being present in amounts sufficient to provide enhanced aged adhesion retention of said tire cord to rubber.

7. The yarn of claim 6 wherein said condensation product is a low temperature reaction product of diphenylamine and acetone.

8. The yarn of claim 7 having deposited thereon 0.05 to 1.0 weight percent paraffin wax and at least about 80 ppm of said condensation product and at least about 20 ppm of said compound, based on yarn weight.

9. Twist plied tire cord prepared from the yarn of claim 6.

10. Polyethylene terephthalate filamentary yarn for tire cord which is treated with from about 0.3 to about 1.5 weight percent solids based on the weight of the yarn of a finish composition comprising an aqueous emulsion, the non-aqueous portion of said emulsion comprising

(a) 45 to 65 parts by weight hexadecyl stearate;

(b) 4 to 6 parts by weight glycerol monooleate;

(c) 3.5 to 5.5 parts by weight decaglycerol monooleate;

(d) 5.5 to 8.1 parts by weight polyoxyethylene tall oil fatty acid containing 10-20 oxyethylene units per mole;

(e) 8.0 to 12.0 parts by weight sulfonated glycerol trioleate;

(f) 2.0 to 4.0 parts by weight polyoxyethylene tallow amine containing an average of 10-30 oxyethylene units per mole;

(g) 0 to 30 parts by weight of a silane having the structural formula

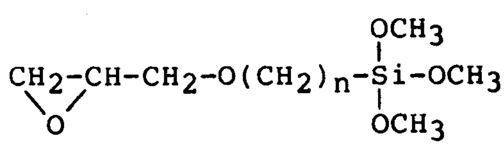

wherin n = 2 to 5; and

(h) 3 to 15 weight percent, based on the non-aqueous portion, of paraffin wax.

11. The polyethylene terephthalate filamentary yarn of claim 10 wherein the non-aqueous portion of said emulsion comprises 5 to 30 parts by weight gammaglycidoxypropyltrimethoxysilane.

12. Twist plied tire cord prepared from the yarn of claim 11.